Europäisches Patentamt

European Patent Office

Office européen des brevets

(11) Veröffentlichungsnummer : **0 118 742**
**B1**

(12) **EUROPÄISCHE PATENTSCHRIFT**

(45) Veröffentlichungstag der Patentschrift :
28.05.86

(51) Int. Cl.⁴ : **B 65 G 53/56**

(21) Anmeldenummer : **84101148.9**

(22) Anmeldetag : **04.02.84**

(54) **Rohrweiche für Rohrleitungen zur Förderung von Feststoffen.**

(30) Priorität : **14.02.83 DE 3305078**

(43) Veröffentlichungstag der Anmeldung :
**19.09.84 Patentblatt 84/38**

(45) Bekanntmachung des Hinweises auf die Patenterteilung : **28.05.86 Patentblatt 86/22**

(84) Benannte Vertragsstaaten :
**AT BE CH DE FR GB LI NL**

(56) Entgegenhaltungen :
**DE-B- 1 250 346**
**FR-A- 2 153 410**

(73) Patentinhaber : **HOECHST AKTIENGESELLSCHAFT**
**Postfach 80 03 20**
**D-6230 Frankfurt am Main 80 (DE)**

(72) Erfinder : **Bungert, Theodor**
**Joachim-Ringelnatz-Strasse 2**
**D-6200 Wiesbaden (DE)**

**Beschreibung**

Die Erfindung betrifft eine Rohrweiche für Rohrleitungen zur Förderung von kleinteiligen Feststoffen, die ein Zuleitungsrohr, eine Verteilerkammer und zwei Verteilerrohre enthält.

Derartige Rohrweichen sind bekannt und spielen für die Verteilung von zu fördernden Feststoffen auf mindestens zwei Rohrleitungen eine wichtige Rolle. Die zu verteilenden Stoffe oder Stoffgemische weisen aber oftmals noch Komponenten auf, die sich gegenüber den Materialien, aus denen diese Rohrweichen oder Teile von ihnen in der Praxis bestehen, mehr oder weniger aggressiv verhalten können ; beispielsweise können in diesen Stoffen oder Stoffgemischen aus produktionstechnischen Gründen noch Säuren, Basen oder Salze vorhanden sein, die dann Metalle angreifen (Korrosion) können. Wenn z. B. durch Ausfall von Dichtungen, verringerte Beweglichkeit von Teilen oder Auftreten von Löchern solche unbrauchbar gewordenen Rohrweichen ausgewechselt werden müssen, bedeutet dies nicht nur einen Kostenfaktor durch Materialersatz, sondern auch den möglichen Stillstand von heute oftmals kontinuierlich arbeitenden Produktionsanlagen. Aus dem Stand der Technik sind beispielsweise die folgenden Rohrweichen bekannt geworden :

In der DE-AS 11 65 493 wird eine Rohrweiche für die pneumatische Förderung staubförmiger oder körniger Stoffe beschrieben, welche die Form eines Hosenrohrs hat und in dem als dichtender Abschlußkörper eine sich mit Spiel bewegbare Kugel vorgesehen ist.

Aus der DE-AS 12 44 055 ist eine Zwei-Weg-Membranweiche für mit Feststoffen beladene Flüssigkeits- oder Gasströme bekannt, bei der im Weichengehäuse zu beiden Seiten der Abzweigstelle zwei zum willkürlichen Sperren des einen oder anderen Zweigweges mit Druckluft beaufschlagbar Membranabschnitte angeordnet sind.

Der Rohrverzweiger für pneumatische Förderanlagen gemäß der DE-AS 12 50 346 ist so aufgebaut, daß ein Zuleitungsrohr in eine Verteilerkammer einmündet, von der eine Mehrzahl von Verteilerrohren ausgehen, die jeweils ein Absperrorgan (Ventil) aufweisen. In die Verteilerkammer münden Reinigungsluftdüsen ein, die auf durch Ablagerungen besonders gefährdete Stellen gerichtet sind.

In der DE-OS 14 81 189 wird ein Leitungssystem für die pneumatische Förderung von Feststoffen in einem Trägergas beschrieben, das eine Einlaß- und mindestens zwei Auslaßleitungen aufweist. Jede der Auslaßleitungen enthält ein Ventil, das in einem bestimmten Abstand von der Abzweigung zwischen Einlaß- und Auslaßleitungen angeordnet ist und im Absperrzustand die Ausbildung eines Pfropfens aus dem Feststoff zwischen dem Ventil und der Abzweigung bewirkt. Der Feststoffpfropfen wird entweder beim Öffnen des Ventils von selbst aus der Leitung entfernt oder durch ein Spülgas, das über einen Spülgaseinlaß zwischen Abzweigung und Ventil ins System eingegeben wird.

Aus den DE-PSen 15 56 320 und 17 81 388 ist eine Drehrohrweiche zur wahlweisen Verbindung eines ankommenden Rohres mit einem von mehreren abgehenden Rohren über ein Drehrohr bekannt, das mit seinem Abgangsende zur Verschwenkung um die Achse des Zugangsrohres mit der Randzone eines Drehtellers verbunden ist.

Die Rohrweiche für die pneumatische Förderung chemisch aggressiver staubförmiger oder körniger Stoffe gemäß der DE-OS 19 16 581 besteht aus einem hohlzylindrischen Gehäuse und einem innerhalb des Gehäuses drehbar angeordneten zylindrischen Küken. In die Mantelfläche des Gehäuses münden eine Gutzufuhrleitung und mindestens zwei Gutabführleitungen. Das Küken aus billigem Guß (z. B. Aluminiumguß) enthält Kanäle, die von Rohren aus resistentem Werkstoff (z. B. Chromnickelstahl) gebildet werden. Ebenso sind die anderen mit dem Gut in Wechselwirkung tretenden Teile der Rohrweiche aus resistentem Werkstoff gebildet. Zur Abdichtung können zusätzlich noch. aufblasbare Schlauchringe vorgesehen werden.

Diese Rohrweichen weisen aber unter Praxisanforderungen immer noch Probleme auf, insbesondere dann, wenn die zu fördernden und zu verteilenden Feststoffe noch feucht sind, d. h. zu Zusammenballungen und/oder Verklebungen neigen, oder die Feststoffe oder Dispersionen noch aggressive Komponenten enthalten. Beispielsweise treten sehr häufig in den Verteilerrohren Verstopfungen auf oder die Absperrorgane schließen nicht mehr dicht. Auch der Einsatz von Schlauchmembranen konnte diese Probleme bisher nicht vollständig beheben, da diese bei den bekannten Anordnungen durch die auf sie aufprallenden Feststoffteilchen mechanisch sehr stark beansprucht werden, so daß ein häufiges Aus- und Wiedereinbauen bzw. Auswechseln der Rohrweichen erforderlich bleibt.

Aufgabe der vorliegenden Erfindung ist es, eine Rohrweiche vorzuschlagen, welche die vorher aufgezeigten Nachteile des Standes der Technik nicht aufweist, d. h. insbesondere auch zur Verteilung von solchen Feststoffen geeignet ist, welche noch aggressive Komponenten enthalten oder zu Zusammenballungen oder Verklebungen neigen.

Die Erfindung geht aus von der bekannten Rohrweiche für Rohrleitungen zur Förderung von kleinteiligen Feststoffen, bei der ein Zuleitungsrohr in eine Verteilerkammer einmündet, und zwei je ein Absperrorgan aufweisende Verteilerrohre von dieser ausgehen. Die erfindungsgemäße Rohrweiche ist dann dadurch gekennzeichnet, daß das Zuleitungsrohr tangential in eine zylindrische Verteilerkammer einmündet. In bevorzugten Ausführungsformen weist die zylindrische Verteilerkammer an den Austrittsstellen zu den Verteilerrohren nach innen gekrümmte umlaufende Wehre auf, und je ein Verteilerrohr geht von den beiden Stirnseiten der zylindrischen Verteilerkammer aus.

Der Begriff « tangential » bedeutet in diesem Zusammenhang, daß die Mittelachse des Zuleitungsrohrs mit einer Schnittfläche längs der Achse durch die Verteilerkammer einen Winkel von etwa 90° bildet bzw. eine gedachte Fortsetzung der oberen Umrißlinie des Zuleitungsrohres in Richtung auf die Verteilerkammer eine Tangente am Umfang der Verteilerkammer ist bzw. dieser sehr nahe kommt ; insbesondere ist das Zuleitungsrohr so angeordnet, daß die Mittelachse des Rohres mit der vertikal liegenden Schnittfläche längs der Achse durch die Verteilerkammer einen Winkel von etwa 90° bildet. In der Praxis hat diese tangentiale Anordnung des Zuleitungsrohres in Bezug auf die zylindrische Verteilerkammer die Auswirkung, daß das zu fördernde Gut aus einem kleinteiligen Feststoff — beispielsweise einem Granulat, Pulver oder Feinstpulver, die auch noch Feuchte und/oder Nebenprodukte enthalten können — in der Verteilerkammer kreis-bzw. schraubenförmig umläuft, wobei es sich im wesentlichen entlang oder in der Nähe der Innenwand der Verteilerkammer bewegt. Wird eines der beiden Absperrorgane (beispielsweise Ventile) geschlossen, so wird das in die Verteilerkammer eintretende Gut gezwungen, in Richtung auf den anderen freien Zweigweg auszuweichen. Dabei stellt dann das zunächst auch in den Teil der Verteilerkammer innerhalb des gesperrten Zweigwegs eintretende Gut eine Sperre aus dem Gut selbst dar, wobei es eine Art « Produktring » bildet. In der bevorzugten Ausführungsform mit nach innen gekrümmten umlaufenden Wehren an den Austrittsstellen der Verteilerkammer zu den Verteilerrohren kann diese Anordnung ein Verstopfen (Füllen) der Verteilerrohre im Rohrabschnitt bis zum Absperrorgan vollständig verhindern.

Langzeitversuche zeigen eindeutig, daß die erfindungsgemäße Rohrweiche störungsfrei arbeitet, ohne daß es zu einer starken Beanspruchung der Funktionsteile kommt. Sie weist — verglichen mit dem Stand der Technik — nämlich den Vorteil auf, daß die die verteilende Funktion bewirkenden Teile der Weiche praktisch nicht oder nur in sehr geringem Maße mechanisch und/oder korrosiv beansprucht werden.

In der Zeichnung ist ein Ausführungsbeispiel der erfindungsgemäßen Rohrweiche dargestellt. Sie zeigt in

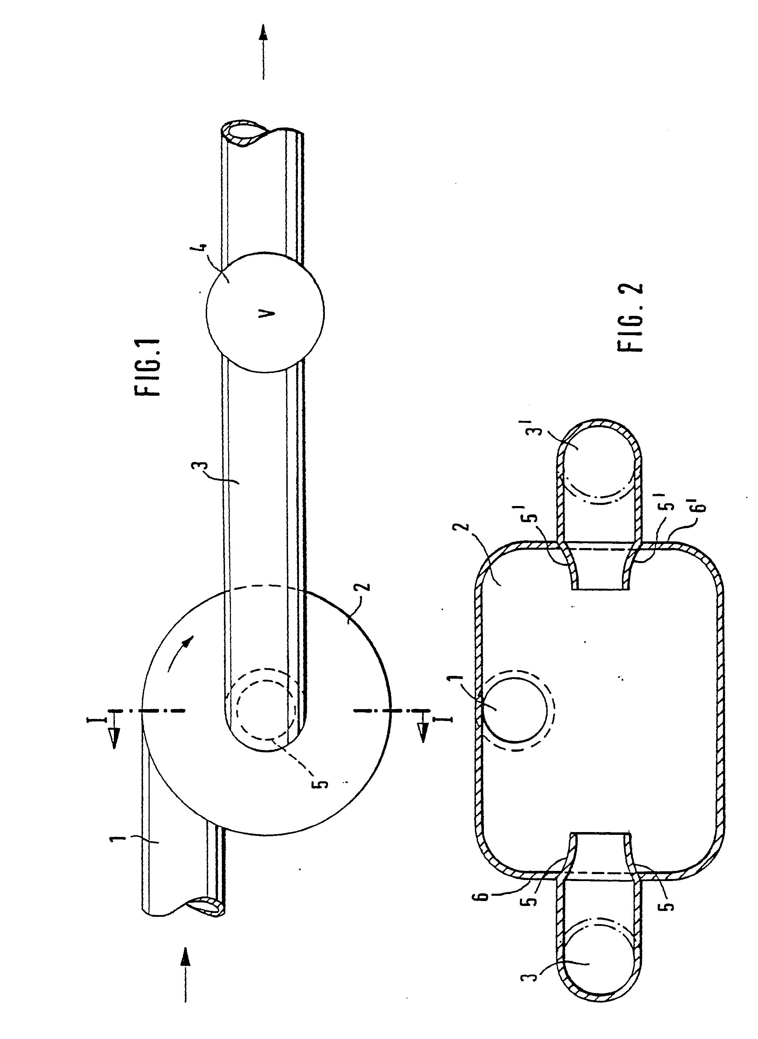

Figur 1 eine Seitenansicht der Rohrweiche

Figur 2 einen Querschnitt durch die Rohrweiche in Höhe der Linie I-I der Fig. 1 und

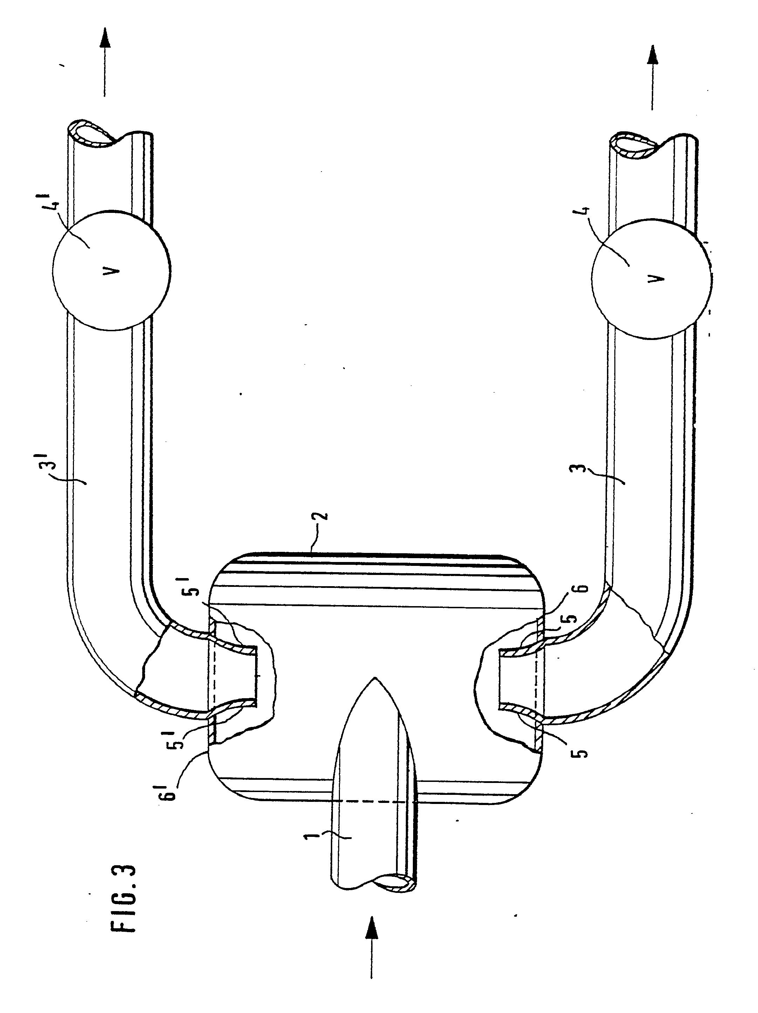

Figur 3 die Rohrweiche in Draufsicht.

Das zu fördernde und zu verteilende Gut, beispielsweise eine pulverförmige Methyl-hydroxyethylcellulose aus einer Zwischenstufe eines Produktionsbetriebs mit einem Trockengehalt von etwa 55 bis 60 Gew.-%, einem Feuchteanteil von etwa 40 bis 45 Gew.-%, der im wesentlichen aus Wasser besteht, aber auch noch Anteile von organischen Lösemitteln wie Alkoholen, von Säuren oder Basen enthalten kann, und einem Salzanteil im Trockengehalt von etwa 1 Gew.-Teil pro Gew.-Teil Wirkstoff wird durch ein Zuleitungsrohr 1 hindurch tangential einer zylindrischen Verteilerkammer 2 zugeführt. Das Gut wird aus der Verteilerkammer 2 durch die beiden senkrecht aus den beiden Stirnseiten 6, 6' der Verteilerkammer 2 austretenden Verteilerrohre 3, 3' hindurch ausgeführt. Danach wird der weitere Verlauf der Austrittsrohre 3, 3' so gestaltet, daß das Gut die Rohrweiche insgesamt in einer der Eintrittsrichtung entsprechenden Richtung verläßt ; es sind jedoch auch andere Austrittsrichtungen aus der Verteilerkammer 2 bzw. den Austrittsrohren 3, 3' möglich, die sich nach den jeweiligen betrieblichen Erfordernissen richten. Die Verteilerkammer 2 weist an den Austrittsstellen zu den Verteilerrohren 3, 3' je ein nach innen gekrümmtes umlaufendes Wehr 5, 5' auf. Zur Steuerung der Verteilungsrichtung, d. h. zur Bestimmung des jeweiligen Zweigweges, enthalten die Verteilerrohre 3, 3' je ein Absperrorgan (z. B. Quetschventil) 4, 4'.

Durch Schließen des linken Absperrorgans 4 versperrt der dadurch im linken Teil der Verteilerkammer 2 entstehende « Produktring » aus dem tangential eingetretenen Gut weiterem eintretenden Gut den Weg durch das Verteilerrohr 3, der rechte Zweigweg durch das Verteilerrohr 3' ist frei. Umgekehrt würde durch das Schließen nur des rechten Absperrorgans 4' der rechte Zweigweg gesperrt und der linke frei. Werden beide Absperrorgane 4, 4' geschlossen, so sind beide Zweigwege gesperrt, und bei Öffnen beider Absperrorgane 4, 4' sind beide Zweigwege frei. Als Material für die Rohre und die Verteilerkammer kann Edelstahl verwendet werden. Durch eine Rohrweiche, deren Rohre einen Innendurchmesser von 100 mm und deren Verteilerkammer einen Innendurchmesser von 300 mm aufweist, können pro h etwa 4 bis 6 t des oben angegebenen rohen Celluloseethers gefördert und verteilt werden.

## Patentansprüche

1. Rohrweiche für Rohrleitungen zur Förderung von kleinteiligen Feststoffen, bei der ein Zuleitungsrohr (1) in eine Verteilerkammer (2) einmündet und zwei je ein Absperrorgan (4, 4') aufweisende Verteilerrohre (3, 3') von dieser ausgehen, dadurch gekennzeichnet, daß das Zuleitungsrohr (1) tangential in eine zylindrische Verteilerkammer (2) einmündet.

2. Rohrweiche nach Anspruch 1, dadurch gekennzeichnet, daß die zylindrische Verteilerkammer (2) an den Austrittsstellen zu den Verteilerrohren (3, 3') nach innen gekrümmte umlaufende Wehre (5, 5') aufweist.

3. Rohrweiche nach Anspruch 1 oder 2, dadurch gekennzeichnet, daß je ein Verteilerrohr (3, 3') von den beiden Stirnseiten (6, 6') der zylindrischen Verteilerkammer (2) ausgeht.

## Claims

1. A pipe divider for pipes for conveying solids of small particle size, in which a feed pipe (1) leads into a distributor chamber (2) and two distributor pipes (3, 3'), each having a shut-off means (4, 4') lead away from this chamber, which comprises a feed pipe (1) which leads tangentially into a cylindrical distributor chamber (2).

2. The pipe divider as claimed in claim 1, wherein the cylindrical distributor chamber (2) has continuous, inward-curved weirs (5, 5') around the outlet points to the distributor pipes (3, 3').

3. The pipe divider as claimed in claim 1 or 2, wherein a distributor pipe (3, 3') leads away from each of the two end faces (6, 6') of the cylindrical distributor chamber (2).

## Revendications

1. Embranchement de tuyaux pour tuyauteries destinées au transport de matières solides constituées de petites particules pour lequel un tuyau d'alimentation (1) débouche dans une chambre de distribution (2) d'où partent deux tuyaux de distribution (3, 3') présentant chacun un organe d'arrêt (4, 4'), caractérisé en ce que le tuyau d'alimentation (1) débouche tangentiellement dans une chambre de distribution cylindrique (2).

2. Embranchement de tuyaux selon la revendication 1, caractérisé en ce que la chambre de distribution cylindrique (2) présente des barrages (5, 5') continus, courbés vers l'intérieur, aux points de sortie vers les tuyaux de distribution (3, 3').

3. Embranchement de tuyaux selon la revendication 1 ou 2, caractérisé en ce qu'un tuyau de distribution (3, 3') part de chacune des faces (6, 6') de la chambre de distribution cylindrique (2).

FIG.1

FIG. 2

0 118 742

FIG.3